# FASCICULE DE BREVET EUROPEEN

(11) **EP 3 438 763 B1**
(45) Date de publication et mention de la délivrance du brevet: **06.05.2020**
(21) Numéro de dépôt: 17184880.7
(22) Date de dépôt: 04.08.2017
(51) Int. Cl.: G04C 3/06

(54) **MOUVEMENT HORLOGER MUNI D'UN TRANSDUCTEUR ÉLECTROMAGNÉTIQUE**
UHRWERK, DAS MIT EINEM ELEKTROMAGNETISCHEN TRANSDUCER AUSGESTATTET IST
CLOCK MOVEMENT PROVIDED WITH AN ELECTROMAGNETIC TRANSDUCER

(43) Date de publication de la demande: 06.02.2019
(73) Titulaire: The Swatch Group Research and Development Ltd, 2074 Marin (CH)
(72) Inventeur: BORN, Jean-Jacques, 1110 Morges (CH); FERRI, Yvan, 1004 Lausanne (CH)
(74) Mandataire: ICB SA

(56) Documents cités:
- EP-A1- 1 109 082
- EP-A1- 1 237 058
- CH-A2- 701 329

## Description

### Domaine technique

L'invention concerne les mouvements horlogers comprenant un transducteur électromagnétique, en particulier avec un rotor portant des aimants polarisés sensiblement axialement du côté de la bobine ou des bobines de ce transducteur électromagnétique.

Plus spécifiquement, le mouvement horloger de l'invention comprend un transducteur électromagnétique formé par un stator et un rotor. Le stator comprend au moins une bobine avec un axe central parallèle à l'axe de rotation du rotor. Le rotor comprend un arbre central, deux tôles magnétiques montées sur l'arbre central et au moins un aimant monté sur une des deux tôles magnétiques de manière à être situé entre ces deux tôles magnétiques. Ladite au moins une bobine s'étend dans un plan général, situé entre les deux tôles magnétiques, à distance axiale dudit au moins un aimant, le rotor et ladite au moins une bobine étant configurés de manière que ladite au moins une bobine est située au moins partiellement dans un espace de révolution qui est défini par le rotor entre ses deux tôles magnétiques depuis son arbre central jusqu'à son pourtour et qui est laissé libre par ce rotor. L'arbre central comprend un pignon qui engrène avec une roue du mouvement horloger.

En général, l'invention concerne des mouvements horlogers munis d'un tel transducteur électromagnétique formant soit un moteur à rotation continue, soit une génératrice associée à un rouage entraîné par un barillet.

### Arrière-plan technologique

Plusieurs documents divulguent des mouvements horlogers munis d'un transducteur électromagnétique du type donné ci-avant dans le domaine technique de l'invention. Plusieurs de ces documents concernent en premier lieu une génératrice, à savoir le brevet CH 597 636, la demande internationale WO 00/63749 et les demandes de brevet européen EP 1 099 990 et EP 1 109 082. Un document plus ancien, à savoir le certificat d'addition FR 2.076.493 à un brevet d'invention, concerne un moteur à rotation continue. EP 1 237 058 A1 concerne un mouvement pour pièce d'horlogerie comportant une unité fonctionnelle comprenant des masses aimantées, ladite unité fonctionnelle étant entourée au moins partiellement de parties d'ébauche non magnétiques recouvertes d'un revêtement de finition. Le revêtement de finition recouvrant lesdites parties d'ébauche situées à proximité de ladite unité fonctionnelle présente des propriétés essentiellement non magnétiques. CH 701 329 A2 concernant un transducteur électromécanique comprend un rotor et deux bobines, le rotor étant formé de première, deuxième et troisième parties en matériau magnétique ayant respectivement des première, deuxième et troisième zones centrales superposées, un premier aimant bipolaire polarisé axialement étant agencé entre les première et deuxième zones centrales et un second aimant bipolaire polarisé axialement selon un sens opposé à celui du premier aimant étant agencé entre les deuxième et troisième zones centrales. Toutes les réalisations décrites dans ces documents prévoient un couplage mécanique du transducteur électromagnétique avec un rouage du mouvement horloger via un pignon, agencé sur l'arbre central du rotor au-dessus ou au-dessous de ses deux tôles magnétiques, en prise avec une roue qui s'étend dans un plan situé au niveau du pignon et donc à un niveau supérieur ou inférieur relativement à l'ensemble formé par les deux tôles magnétiques selon l'axe de rotation du rotor. Ces réalisations ont pour conséquence que le mouvement horloger présente une épaisseur / hauteur au moins aussi grande que la distance axiale nécessaire à l'agencement en superposition des deux tôles magnétiques, pour une hauteur d'aimants donnée et une épaisseur de bobine donnée, augmentée de la hauteur du pignon et des deux paliers de guidage du rotor. On notera qu'il est possible, dans une variante avantageuse, de diminuer un peu l'encombrement du palier situé à l'opposé du pignon de la manière montrée à la Fig. 8 du document EP 1 099 990, mais pas du côté du pignon à cause de la présence de la roue qui demande de toute façon une certaine hauteur additionnelle, comme le montre cette figure.

### Résumé de l'invention

La présente invention a pour objectif de fournir un mouvement horloger, muni d'un transducteur électromagnétique du type décrit précédemment, qui puisse présenter une moindre épaisseur pour un ensemble magnétique prédéterminé de ce transducteur électromagnétique. Par 'ensemble magnétique', on comprend ici la bobine ou les bobines formant le stator et la pluralité d'aimants bipolaires montés sur les deux tôles magnétiques.

A cet effet, la présente invention concerne un mouvement horloger tel que défini spécifiquement dans le domaine technique exposé ci-avant et qui est caractérisé en ce que le stator est configuré de manière à laisser libre un secteur angulaire de l'espace de révolution dont l'angle d'ouverture est sélectionné pour permettre une pénétration radiale de la roue mentionnée dans cet espace de révolution jusqu'à l'arbre central du rotor en demeurant dans ce secteur angulaire; en ce que le pignon est agencé entre les deux tôles magnétiques et présente au moins une partie utile située entre deux plans géométriques définissant l'espace de révolution selon l'axe de rotation du rotor; et en ce que ladite roue est partiellement agencée entre les deux tôles magnétiques, dans ledit secteur angulaire de l'espace de révolution, de manière à engrener avec le pignon.

Grâce aux caractéristiques de l'invention, il est possible d'obtenir un mouvement horloger présentant une hauteur / épaisseur moindre. En effet, le pignon et la roue engrenant avec ce pignon ne nécessitent plus une certaine hauteur propre en addition des éléments magnétiques du rotor et des bobines. Dans une variante avantageuse dans laquelle les bobines présentent une épaisseur sensiblement égale ou supérieure à celle du plateau de la roue en question, le couplage mécanique du transducteur électromagnétique avec un rouage du mouvement horloger ne nécessite aucune hauteur supplémentaire relativement à celle requise par les éléments magnétiques du rotor. Des modes de réalisation préférés de la présente invention sont définis dans les revendications dépendantes 2-10.

### Brève description des figures

L'invention sera décrite ci-après de manière plus détaillée à l'aide des dessins annexés, donnés à titre d'exemples nullement limitatifs, dans lesquels :
- La figure 1 (Fig. 1) est une vue d'une coupe partielle en hauteur, selon la ligne I-I de la Figure 2, d'un mouvement horloger selon l'invention ;
- La figure 2 (Fig. 2) est une vue partielle d'une coupe du mouvement de la figure 1 selon un plan perpendiculaire à l'axe de rotation du rotor d'un transducteur électromagnétique de l'invention, ce plan perpendiculaire étant situé entre les bobines et la tôle magnétique supérieure du rotor ;
- La figure 3 (Fig. 3) est une vue en coupe du rotor des figures 1 et 2 selon un plan perpendiculaire à son axe de rotation au niveau de son pignon.

### Description détaillée de l'invention

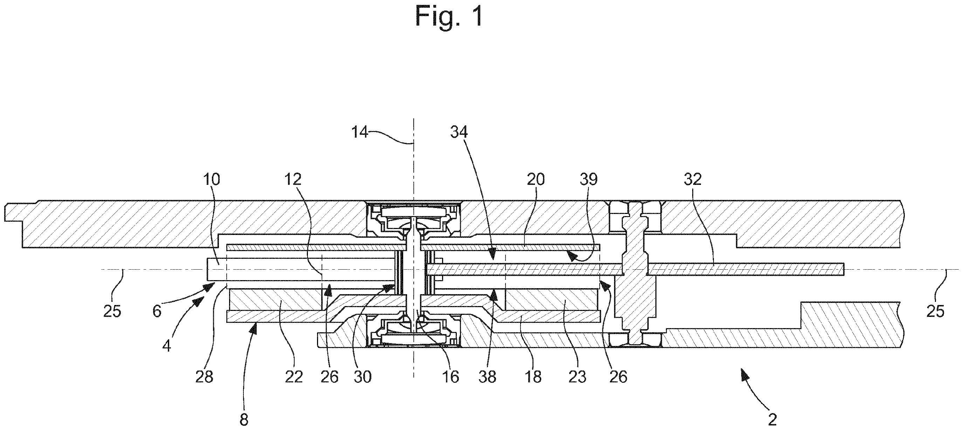

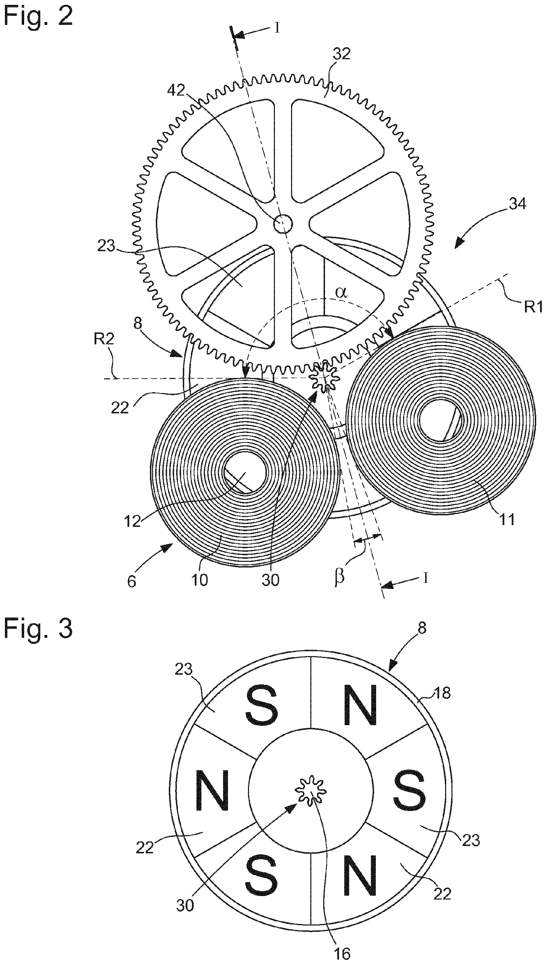

En référence aux figures 1 à 3, on décrira ci-après un mode de réalisation d'un mouvement horloger selon la présente invention :
Le mouvement horloger 2 comprend un transducteur électromagnétique 4 formé par un stator 6 et un rotor 8. Le stator comprend deux bobines 10 et 11 ayant chacune un axe central 12 qui est parallèle à l'axe de rotation 14 du rotor. Les deux bobines sont avantageusement du type galette, c'est-à-dire que leur épaisseur selon leur axe central est substantiellement inférieure à leur dimension maximale dans un plan général perpendiculaire à cet axe central. Les bobines représentées ont la forme d'un disque plat. Cependant, d'autres profils extérieurs qu'un profil circulaire sont envisageables, notamment un profil ovoïde ou trapézoïdal.

Le rotor 8 comprend un arbre central 16, deux tôles magnétiques 18 et 20 montées sur l'arbre central et une pluralité d'aimants bipolaires 22,23 qui sont polarisés axialement et montés sur au moins une des deux tôles magnétiques de manière à être situés entre ces deux tôles magnétiques. Dans la variante représentée, la pluralité d'aimants est agencée seulement sur la tôle magnétique inférieure 18 à laquelle ils sont fixés notamment par collage. Dans ce cas, la tôle magnétique supérieure 20 sert seulement de plaque de fermeture des lignes de champ du flux magnétique généré par les aimants. Les deux tôles magnétiques forment ensemble une structure de blindage servant à substantiellement confiner les flux magnétiques des aimants dans le volume défini par le rotor et un relativement petit volume latéral à sa périphérie. Dans une autre variante, les aimants bipolaires sont portés à parts égales par les deux tôles magnétiques. Dans ce cas, les aimants sont alignés axialement par paire d'aimants ayant tous deux une polarité de même sens de manière à engendrer entre eux un flux magnétique sensiblement axial. Les aimants sont agencés avec une période angulaire donnée sur une seule des deux tôles magnétiques ou sur les deux tôles magnétiques. Dans la variante représentée, les polarités des aimants sont alternées, ce qui distingue les aimants 22 des aimants 23. On remarquera que les aimants bipolaires peuvent être formés par des éléments distincts et initialement séparés l'un de l'autre avant leur fixation sur l'une des deux tôles magnétiques, mais ces aimants bipolaires peuvent aussi être formés par un aimant multipolaire annulaire ayant 2N pôles magnétiques formant des paires de pôles à aimantation axiale, N étant supérieur à un. On notera que ces variantes ne sont nullement limitatives.

Les deux bobines s'étendent dans un plan général 25, situé entre les deux tôles magnétiques 18 et 20, à distance axiale de la pluralité d'aimants. Le rotor et les deux bobines sont configurés de manière que ces deux bobines sont situées partiellement dans un espace de révolution 26 qui est défini par le rotor entre ses deux tôles magnétiques depuis son arbre central 16 jusqu'à son pourtour 28 et qui est laissé libre par ce rotor. L'arbre central comprend un pignon 30 qui engrène avec une roue 32 d'un mécanisme du mouvement horloger. Selon l'invention, le stator est configuré de manière à laisser libre un secteur angulaire 34 de l'espace de révolution 26 dont l'angle d'ouverture α est sélectionné pour permettre une pénétration radiale de la roue 32 dans l'espace de révolution jusqu'à l'arbre central 16 en demeurant dans ce secteur angulaire. De manière remarquable, le pignon 30 est agencé entre les deux tôles magnétiques 18 et 20 et présente au moins une partie utile située entre deux plans géométriques 38 et 39 définissant l'espace de révolution selon l'axe de rotation 14. Ainsi, selon l'invention, la roue 32 est partiellement agencée entre les deux tôles magnétiques, dans ledit secteur angulaire de l'espace de révolution, de manière à engrener avec le pignon 30. De préférence, la roue 32 est configurée et/ou constituée d'un matériau spécifique pour diminuer, voire éliminer des pertes énergétiques par courant de Foucault. En effet, si le plateau de la roue est formé par un disque substantiellement plein en matériau métallique bon conducteur, le passage des aimants du rotor en regard de ce plateau engendre des pertes relativement importantes par courant de Foucault. Si le plateau présente une pluralité d'ouvertures, en particulier sensiblement radiales ou définissant des secteurs annulaires vides, de telles pertes sont diminuées. A titre d'exemple, le plateau de la roue 32 présente un moyeu et une jante reliés par quelques rayons de relativement faible largeur. Dans une variante avantageuse, le matériau formant le plateau est un alliage métallique du type Inconel® qui présente une résistivité très supérieure à celle du laiton. En utilisant un tel alliage métallique, on peut envisager un plateau substantiellement plein, voire un disque non ajouré. Pour éliminer complétement les pertes en question, le plateau peut être constitué par un matériau synthétique, par exemple du polyoxyméthylène ('POM'). De manière générale, on évitera un matériau magnétique pour le plateau de la roue. Il en va de même pour l'axe de la roue 32, ceci afin d'éviter que le rotor n'exerce une force d'attraction sur cet axe. En effet, dans le cas contraire, des pertes par frottement seraient générées au niveau des paliers dans lesquels pivote la roue 32. L'axe sera par exemple réalisé avec un alliage cuivre-béryllium ou en matière plastique.

Selon une variante avantageuse, la roue 32 s'étend dans le plan général 25 des deux bobines 10 et 11 avec son axe 42 agencé à la périphérie du rotor. En particulier, l'angle d'ouverture α du secteur angulaire 34 prévu pour cette roue est supérieur à 120°.

Selon une variante avantageuse, la roue 32 et les deux bobines 10 et 11 présentent des dimensions telles que les zones angulaires entre elles présentent un angle au centre β inférieur à 10°.

Dans une première réalisation selon l'invention, le transducteur électromagnétique forme un moteur à rotation continue. Dans une deuxième réalisation de l'invention, le transducteur électromagnétique forme une génératrice et la roue 32 appartient à un rouage en prise avec un barillet du mouvement horloger.

## Revendications

1. Mouvement horloger (2) comprenant un transducteur électromagnétique (4) formé par un stator (6) et un rotor (8), le stator comprenant au moins une bobine (10) avec un axe central (12) parallèle à l'axe de rotation (14) du rotor, le rotor comprenant un arbre central (16), deux tôles magnétiques (18,20) montées sur l'arbre central et au moins un aimant (22) monté sur une (18) des deux tôles magnétiques de manière à être situé entre ces deux tôles magnétiques, ladite au moins une bobine s'étendant dans un plan général (25), situé entre les deux tôles magnétiques, à distance axiale dudit au moins un aimant, le rotor et ladite au moins une bobine étant configurés de manière que ladite au moins une bobine est située au moins partiellement dans un espace de révolution (26) qui est défini par le rotor entre ses deux tôles magnétiques depuis son arbre central jusqu'à son pourtour (28) et qui est laissé libre par ce rotor, ledit arbre central comprenant un pignon (30) qui engrène avec une roue (32) du mouvement horloger ; **caractérisé en ce que** ledit stator est configuré de manière à laisser libre un secteur angulaire (34) dudit espace de révolution (26) dont l'angle d'ouverture (a) est sélectionné pour permettre une pénétration radiale de ladite roue (32) dans ledit espace de révolution jusqu'audit arbre central en demeurant dans ce secteur angulaire ; **en ce que** ledit pignon est agencé entre les deux tôles magnétiques et présente au moins une partie utile située entre deux plans géométriques (38,39) définissant ledit espace de révolution selon ledit axe de rotation ; et **en ce que** ladite roue est partiellement agencée entre les deux tôles magnétiques, dans ledit secteur angulaire de l'espace de révolution, de manière à engrener avec ledit pignon.

2. Mouvement horloger selon la revendication 1, **caractérisé en ce que** ladite au moins une bobine (10) est du type galette.

3. Mouvement horloger selon la revendication 2, **caractérisé en ce que** le stator comprend deux bobines (10,11) du type galette.

4. Mouvement horloger selon la revendication 3, **caractérisé en ce que** ladite roue s'étend dans ledit plan général (25), ledit angle d'ouverture (a) est supérieur à 120° et l'axe (42) de la roue est agencé à la périphérie du rotor.

5. Mouvement horloger selon la revendication 4, **caractérisé en ce que** ladite roue et les deux bobines présentent des dimensions telles que les zones angulaires entre elles présentent un angle au centre (β) inférieur à 10°.

6. Mouvement horloger selon l'une quelconque des revendications précédentes, **caractérisé en ce que** le rotor (8) comprend une pluralité d'aimants bipolaires (22,23) qui sont polarisés axialement et montés avec une période angulaire donnée sur au moins une des deux tôles magnétiques.

7. Mouvement horloger selon l'une quelconque des revendications précédentes, **caractérisé en ce que** ladite roue a un plateau constitué par un alliage métallique nickel-chrome ou par une matière synthétique, en particulier du polyoxyméthylène.

8. Mouvement horloger selon l'une quelconque des revendications précédentes, **caractérisé en ce que** ladite roue a un axe constitué par un matériau non magnétique, en particulier un alliage cuivre-béryllium ou une matière plastique.

9. Mouvement horloger selon l'une quelconque des revendications précédentes, **caractérisé en ce que** le transducteur électromagnétique forme un moteur à rotation continue.

10. Mouvement horloger selon l'une quelconque des revendications précédentes, **caractérisé en ce que** le transducteur électromagnétique forme une génératrice, ladite roue (32) appartenant à un rouage en prise avec un barillet du mouvement horloger.

## Patentansprüche

1. Uhrwerk (2), umfassend einen elektromagnetischen Wandler (4), der aus einem Stator (6) und einem Rotor (8) gebildet wird, wobei der Stator mindestens eine Spule (10) mit einer zu der Drehachse (14) des Rotors parallelen Mittelachse (12) aufweist, und der Rotor eine zentrale Welle (16), zwei auf der zentralen Welle montierte Magnetplatten (18, 20) und mindestens einen Magneten (22) umfasst, der auf einer (18) der beiden Magnetplatten so montiert ist, dass er sich zwischen diesen beiden Magnetplatten befindet, wobei sich die mindestens eine Spule in einer Hauptebene (25) erstreckt, die zwischen den beiden Magnetplatten in einem axialen Abstand von dem mindestens einen Magneten angeordnet ist, wobei der Rotor und die mindestens eine Spule so konfiguriert sind, dass die mindestens eine Spule mindestens teilweise in einem Umdrehungsraum (26) angeordnet ist, der durch den Rotor zwischen seinen beiden Magnetplatten von seiner zentralen Welle bis zu seinem Umfang (28) definiert ist und der von diesem Rotor freigelassen wird, wobei die zentrale Welle ein Ritzel (30) umfasst, das mit einem Rad (32) des Uhrwerks im Eingriff steht; **dadurch gekennzeichnet, dass** der Stator so konfiguriert ist, dass er einen Winkelsektor (34) des Umdrehungsraums (26) frei lässt, dessen Öffnungswinkel (a) so gewählt ist, dass er ein radiales Eindringen des Rades (32) in den Umdrehungsraum bis zur zentralen Welle ermöglicht, während er innerhalb dieses Winkelsektors bleibt; dass das Ritzel zwischen den beiden Magnetplatten angeordnet ist und mindestens einen nutzbaren Teil aufweist, der zwischen zwei geometrischen Ebenen (38, 39) liegt, die den Umdrehungsraum entlang der Drehachse definieren; und dass das Rad teilweise zwischen den beiden Magnetplatten in dem Winkelsektor des Umdrehungsraums angeordnet ist, so dass es mit dem Ritzel in Eingriff steht.

2. Uhrwerk nach Anspruch 1, **dadurch gekennzeichnet, dass** die mindestens eine Spule (10) vom Wafer-Typ ist.

3. Uhrwerk nach Anspruch 2, **dadurch gekennzeichnet, dass** der Stator aus Spulen (10, 11) vom Wafer-Typ besteht.

4. Uhrwerk nach Anspruch 3, **dadurch gekennzeichnet, dass** sich das Rad in der Hauptebene (25) erstreckt, der Öffnungswinkel (a) größer ist als 120° und die Achse (42) des Rades zum Rotorumfang angeordnet ist.

5. Uhrwerk nach Anspruch 4, **dadurch gekennzeichnet, dass** das Rad und die beiden Spulen so dimensioniert sind, dass die Winkelbereiche zwischen ihnen einen Zentriwinkel (β) von weniger als 10° aufweisen.

6. Uhrwerk nach einem der vorstehenden Ansprüche, **dadurch gekennzeichnet, dass** der Rotor (8) mehrere zweipolige Magnete (22, 23) umfasst, die axial polarisiert und mit einer bestimmten Winkelperiode auf mindestens eine der beiden Magnetplatten montiert sind.

7. Uhrwerk nach einem der vorstehenden Ansprüche, **dadurch gekennzeichnet, dass** das Rad eine Platte aufweist, die aus einer NickelChrom-Metalllegierung oder aus einem synthetischen Material, insbesondere Polyoxymethylen, besteht.

8. Uhrwerk nach einem der vorstehenden Ansprüche, **dadurch gekennzeichnet, dass** das Rad eine Achse aufweist, die aus einem nichtmagnetischen Material, insbesondere einer Kupfer-Beryllium-Legierung oder einem Kunststoffmaterial, besteht.

9. Uhrwerk nach einem der vorstehenden Ansprüche, **dadurch gekennzeichnet, dass** der elektromagnetische Wandler einen kontinuierlich drehenden Motor bildet.

10. Uhrwerk nach einem der vorstehenden Ansprüche, **dadurch gekennzeichnet, dass** der elektromagnetische Wandler einen Generator bildet, wobei das Rad (32) zu einem Räderwerk gehört, das mit einem Federhaus des Uhrwerks in Eingriff steht.

## Claims

1. Timepiece movement (2) comprising an electromagnetic transducer (4) formed by a stator (6) and a rotor (8), the stator comprising at least one coil (10) with a central axis (12) that is parallel to the axis of rotation (14) of the rotor, the rotor comprising a central shaft (16), two magnetic plates (18, 20) that are mounted on the central shaft and at least one magnet (22) that is mounted on one (18) of the two magnetic plates so as to be located between these two magnetic plates, said at least one coil lying in a general plane (25), located between the two magnetic sheets, axially remote from said at least one magnet, the rotor and said at least one coil being configured so that said at least one coil is located at least partially in a circular space (26) which is defined by the rotor between its two magnetic plates from its central shaft to its periphery (28) and which is left free by this rotor, said central shaft comprising a pinion (30) which engages with a wheel (32) of the timepiece movement;
**characterized in that** said stator is configured so as to leave an angular sector (34) of said circular space (26) free, the aperture angle (a) of which is selected to allow said wheel (32) to penetrate radially into said circular space up to said central shaft while remaining in this angular sector; **in that** said pinion is arranged between the two magnetic plates and has at least one useful portion located between two geometric planes (38, 39) defining said circular space about said axis of rotation; and **in that** said wheel is partially arranged between the two magnetic plates, in said angular sector of the circular space, so as to engage with said pinion.

2. Timepiece movement according to Claim 1, **characterized in that** said at least one coil (10) is a pancake coil.

3. Timepiece movement according to Claim 2, **characterized in that** the stator comprises two pancake coils (10,11).

4. Timepiece movement according to Claim 3, **characterized in that** said wheel lies in said general plane (25), said aperture angle (α) is larger than 120° and the staff (42) of the wheel is arranged at the periphery of the rotor.

5. Timepiece movement according to Claim 4, **characterized in that** the sizes of said wheel and of the two coils are such that the angular areas between them have an angle at the centre (β) that is smaller than 10°.

6. Timepiece movement according to any one of the preceding claims, **characterized in that** the rotor (8) comprises a plurality of bipolar magnets (22, 23) which are axially polarized and mounted according to a given angular period on at least one of the two magnetic plates.

7. Timepiece movement according to any one of the preceding claims, **characterized in that** said wheel has a roller made of a nickel-chromium metal alloy or a synthetic material, in particular polyoxymethylene.

8. Timepiece movement according to any one of the preceding claims, **characterized in that** said wheel has a staff made of a non-magnetic material, in particular a copper-beryllium alloy or a plastic material.

9. Timepiece movement according to any one of the preceding claims, **characterized in that** the electromagnetic transducer forms a continuous-rotation motor.

10. Timepiece movement according to any one of the preceding claims, **characterized in that** the electromagnetic transducer forms a generator, said wheel (32) belonging to a wheel train that is interengaged with a barrel of the timepiece movement.
